# DEMANDE DE BREVET EUROPEEN

(11) **EP 1 143 344 A1**
(43) Date de publication de la demande: **10.10.2001**
(21) Numéro de dépôt: 01400426.1
(22) Date de dépôt: 19.02.2001
(51) Int. Cl.: G06F 13/362

(54) **Procédé et circuit intégré de gestion de l'accès d'au moins deux maitres à un bus commun**

(30) Priorité: 06.03.2000 FR 0002820
(71) Demandeur: ALCATEL, 75008 Paris (FR)
(72) Inventeur: Berthaud, Olivier, 75018 Paris (FR); Eyzat, Gilles, 92250 La Garenne Colombes (FR)
(74) Mandataire: Lamoureux, Bernard

(57) **Abrégé**

Selon ce procédé, l'accès au bus est géré par une politique attribuant des priorités graduelles aux différents maîtres (M1 à M3) de façon qu'un nouveau maître prioritaire succède sur le bus à un maître courant dès que ce maître courant quitte le bus. Cette politique d'attribution de priorités est matérialisée par des portes logiques intégrées dans un circuit, par exemple de type circuit intégré spécifique à des applications (ASIC). On alloue à chaque maîtres (M1 à M3) une fenêtre temporelle (T1 à T3) d'occupation du bus, cette fenêtre constituant un paramètre modifiable propre au maître auquel elle est allouée. De préférence, la politique d'attribution de priorité est du type LRU (Last Recently Used), c'est-à-dire attribuant la priorité de niveau le plus élevé au maître le moins récemment utilisé.

## Description

La présente invention concerne un procédé et un circuit intégré de gestion de l'accès d'au moins deux maîtres à un bus commun.

Elle s'applique en particulier à la gestion d'accès à un bus commun de plusieurs microprocesseurs utilisés dans les équipements de téléphonie mobile ou fixe, intégrés le cas échéant dans un environnement multimédia donnant accès notamment au réseau internet.

A titre d'exemple, une architecture regroupant plusieurs maîtres destinés à accéder à un bus commun peut comprendre notamment un processeur central dédié à des tâches générales, un processeur de type DSP (Digital Signal Processor) dédié à des traitements mathématiques particuliers et un module d'accès direct à la mémoire : DMA (Direct Memory Access).

On connaît déjà dans l'état de la technique un procédé et un circuit intégré de gestion de l'accès d'au moins deux maîtres à un bus commun, du type dans lesquels l'accès au bus est géré par une politique attribuant des priorités graduelles aux différents maîtres de façon qu'un nouveau maître prioritaire succède sur le bus à un maître courant dès que ce maître courant quitte le bus, cette politique d'attribution de priorités étant matérialisée par des portes logiques intégrées dans le circuit.

On connaît également dans l'état de la technique plusieurs types de politique pour gérer les priorités entre différents maîtres. Il existe par exemple les politiques de type « fixe » selon lesquelles des priorités graduelles sont attribuées une fois pour toutes aux différents maîtres, la priorité de niveau le plus élevé étant attribuée définitivement à un même maître. Il existe également les politiques de type « circulaire » selon lesquelles les priorités graduelles attribuées aux différents maîtres sont modifiées par permutation circulaire. Il existe encore les politiques de type « LRU » (Last Recently Used), selon lesquelles la priorité de niveau le plus élevé est attribuée au maître « le moins récemment utilisé », c'est-à-dire ayant le moins récemment occupé le bus. Bien entendu il existe d'autres politiques de gestion de priorité que celles données en exemple ci-dessus, certaines pouvant être de type pseudo aléatoire.

Habituellement, les portes logiques matérialisant une politique de gestion de priorité sont intégrées dans un circuit couramment appelé ASIC (Applications Specific Integrated Circuit) ou encore circuit intégré spécifique à des applications.

Pour satisfaire de nouvelles applications de plus en plus nombreuses soumises à des contraintes sévères de fonctionnement en temps réel, les constructeurs d'ensembles de puces (chip sets) souhaitent améliorer les performances des architectures comprenant plusieurs microprocesseurs . Ceci conduit à compléter les architectures de type maître-esclave avec des architectures multi-maître assurant un fonctionnement en parallèle des différents microprocesseurs maîtres ou du moins donnant l'apparence à l'utilisateur d'un fonctionnement en parallèle de ces maîtres.

Cependant, dans le cas d'une d'architecture multi-maître, la gestion des priorités d'accès à un bus commun par des politiques d'arbitrage telles que celles évoquées dans les exemples ci-dessus ne suffit pas à garantir une bande passante (nombre de cycles par unité de temps pendant lequel un maître occupe le bus) suffisante pour chacun des maîtres.

En effet, selon la fonction des différents processeurs maîtres et la politique d'attribution de priorité choisie, on peut craindre qu'un maître monopolise le bus en étant constamment émetteur de messages sur ce bus ou bien qu'un maître n'obtienne jamais satisfaction à une requête d'accès au bus.

L'invention a pour but de gérer l'accès de plusieurs processeurs maîtres à un bus commun par une politique d'attribution de priorités mise en oeuvre par un circuit intégré de type ASIC, ceci en garantissant l'accès de chacun des maîtres au bus commun et en limitant le temps d'attente entre la requête d'un maître et son acquittement.

A cet effet, l'invention a pour objet un procédé de gestion de l'accès d'au moins deux maîtres à un bus commun du type mentionné ci-dessus, caractérisé en ce qu'on alloue à chaque maître une fenêtre temporelle d'occupation du bus, cette fenêtre constituant un paramètre modifiable propre au maître auquel elle est allouée.

Suivant d'autres caractéristiques de ce procédé:
- la politique d'attribution de priorité est du type LRU -Last Recently Used-, c'est-à-dire attribuant la priorité de niveau le plus élevé au maître le moins récemment utilisé;
- les modifications des différentes fenêtres temporelles d'occupation du bus sont réalisées par un logiciel.

L'invention à également pour objet un circuit intégré de gestion de l'accès d'au moins deux maîtres à un bus commun du type mentionné ci-dessus, caractérisé en ce qu'il comprend des moyens de mémorisation de données définissant des fenêtres temporelles d'occupation du bus allouées aux différents maîtres respectivement.

Suivant d'autres caractéristiques de ce circuit intégré:
- les moyens de mémorisation sont constitués par une mémoire vive et/ou des registres de façon à permettre la modification des fenêtres temporelles par un logiciel;
- le circuit constitue un module de « circuit intégré spécifique à des applications » couramment appelé ASIC (Applications Specific Integrated Circuit).

L'invention sera mieux comprise à la lecture de la description qui va suivre, donnée uniquement à titre d'exemple et faite en se référant aux dessins annexés dans lesquels :
- la figure 1 est une vue schématique d'un module de circuit intégré spécifique à des applications (ASIC - Applications Specific Integrated Circuit) selon l'invention;
- la figure 2 est un diagramme représentant un exemple de séquence d'occupation d'un bus par trois maîtres;

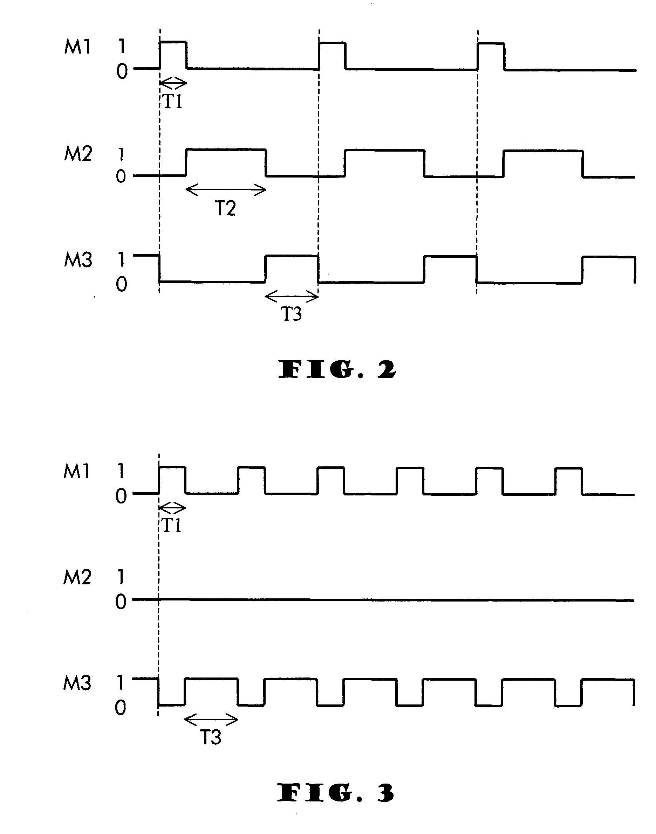

- la figure 3 est un diagramme similaire à celui de la figure 2 représentant l'évolution des séquences d'occupation du bus lorsque l'un des trois maîtres ne requiert plus le bus;
- les figures 4 à 6 sont des diagrammes représentant des exemples de gestion des priorités d'accès de quatre maîtres sur un bus commun conformément à une politique de type LRU (Last Recently Used).

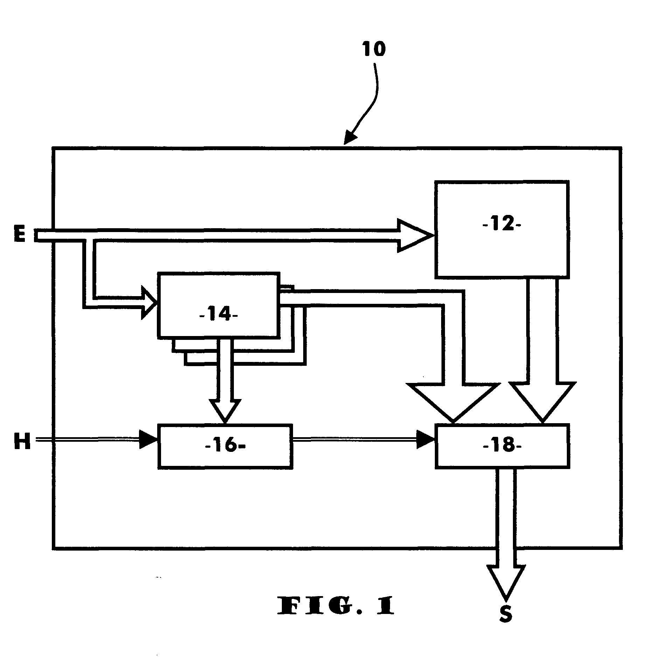

On a représenté sur la figure 1 un module de circuit intégré selon l'invention, désigné par la référence générale 10. Ce circuit est du type « circuit intégré spécifique à des applications » couramment appelé ASIC (Applications Specific Integrated Circuit).

Le module de circuit intégré 10 est destiné à gérer l'accès de plusieurs microprocesseurs maîtres (au moins deux maîtres) à un bus commun classique non représenté de manière à obtenir un fonctionnement en parallèle des différents microprocesseurs maîtres ou du moins à donner l'apparence à l'utilisateur d'un fonctionnement en parallèle de ces maîtres.

A cet effet, le module de circuit intégré 10 reçoit en entrée E des requêtes d'accès au bus provenant des maîtres et fournit en sortie S des acquittements de requête.

Le module de circuit intégré 10 comprend également une unité 12 de gestion des priorités des différents maîtres, matérialisée de façon connue en soi par des portes logiques intégrées dans le module, et des moyens 14 de mémorisation de données définissant des fenêtres temporelles d'occupation du bus allouées aux différents maîtres respectivement. Ces données sont de préférence rangées dans une table.

De façon classique, l'unité 12 attribue des priorités graduelles aux différents maîtres de façon qu'un nouveau maître prioritaire succède sur le bus à un maître courant dès que ce maître courant quitte le bus.

De préférence, l'unité 12 met en oeuvre une politique d'attribution de priorité de type classique LRU (Last Recently Used) selon laquelle la priorité de niveau le plus élevé est attribuée au maître « le moins récemment utilisé ».

Les moyens de mémorisation 14 sont de préférence constitués par une mémoire vive de type RAM et/ou des registres de façon à pouvoir modifier les valeurs des fenêtres temporelles contenues dans les tables. Chaque fenêtre constitue donc un paramètre modifiable propre au maître auquel elle est attribuée. La programmation des fenêtres temporelles est réalisée de façon connue en soi par un logiciel.

Le module de circuit intégré 10 comprend encore un générateur de compteur 16 et un générateur d'acquittement 18.

Le générateur de compteur 16, cadencé par une horloge H, informe le générateur d'acquittement 18 de l'écoulement d'une fenêtre temporelle mémorisée.

Le générateur d'acquittement 18 génère l'acquit-tement d'un maître en fonction des informations fournies par l'unité 12 de gestion des priorités, les moyens de mémorisation 14 et le générateur de compteur 16.

On a représenté sur la figure 2 un diagramme illustrant un exemple de séquence d'occupation d'un bus par trois maîtres M1 à M3. Les bandes passantes de chacun des maîtres M1 à M3 sur le bus sont représentées séparément par des courbes en créneaux ayant soit la valeur 0 lorsque le maître est absent du bus soit la valeur 1 lorsque le maître occupe le bus. Une fenêtre temporelle T1 à T3 d'occupation du bus est allouée à chaque maître M1 à M3.

On observe sur la figure 2 que, conformément à la politique de gestion de priorité, un nouveau maître prioritaire succède sur le bus à un maître courant dès que ce maître courant quitte le bus (remplacement synchrone). Ainsi, dans cet exemple, le deuxième maître M2 succède au premier maître M1, le troisième maître M3 succède au deuxième maître M2 et le premier maître M1 succède au troisième maître M3.

On observe également sur la figure 2 qu'aucun maître ne peut monopoliser le bus au-delà de sa fenêtre temporelle.

La figue 3 illustre le cas où le deuxième maître M2 cesse de requérir le bus. Conformément à la politique de gestion de priorité, le troisième maître M3 succède dans ce cas au premier maître M1 et ce dernier succède au troisième maître M3. Les fenêtres temporelles des deux maîtres M1,M3 requérant le bus ne sont pas modifiées par le retrait de la requête de l'autre maître M2. Cependant, la bande passante de chaque maître M1,M3 requérant le bus augmente par rapport à la situation illustrée sur la figure 2 du fait que la fréquence d'occupation du bus augmente pour chacun d'eux.

Le diagramme de la figure 4 illustre un exemple de gestion des priorités d'accès de quatre maîtres M1 à M4 sur un bus commun conformément à une politique de type LRU (Last Recently Used).

La succession des maîtres sur le bus est schématisée par une succession de segments sur l'axe horizontal, chaque segment correspondant à une fenêtre temporelle T1 à T4 allouée à un maître M1 à M4. On notera sur la figure 4 que le quatrième maître M4 ne requiert pas le bus.

La gestion de la gradation des priorités des maîtres conformément à la politique de type LRU est schématisée par des colonnes successives dans lesquelles les numéros 1 à 4 identifient les quatre maîtres respectivement. Plus le numéro est placé bas dans une colonne, plus le niveau de priorité du maître correspondant est élevé. Le numéro du quatrième maître M4, ne requérant pas le bus, est barré par une croix. Chaque colonne indique donc le maître prioritaire pour l'accès au bus à l'expiration de la fenêtre temporelle du maître courant occupant le bus.

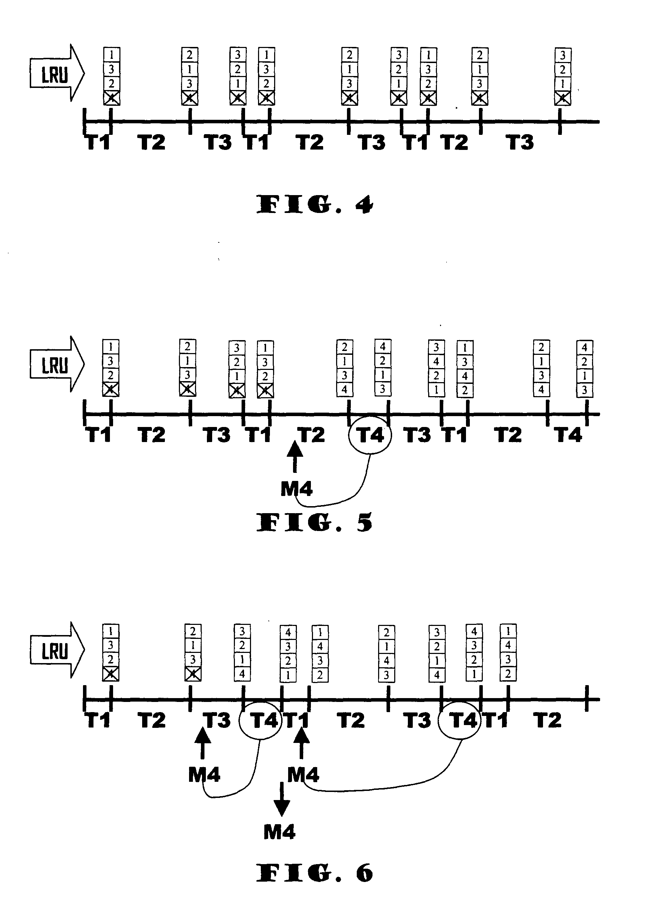

Les diagrammes des figures 5 et 6 illustrent la prise en compte d'une requête d'accès au bus par le quatrième maître M4.

Dans le premier cas illustré sur la figure 5, la périodicité de la requête du quatrième maître M4 est supérieure à la somme des fenêtres temporelles des trois autres maîtres.

Conformément à la politique LRU d'attribution de priorités, la priorité de niveau le plus élevé est attribuée au maître M4 introduisant sa requête, du fait qu'il est le maître « le moins récemment utilisé ». La requête du quatrième maître M4, apparaissant par exemple pendant la fenêtre temporelle d'occupation du bus par le second maître M2, sera acquittée à la fin de cette fenêtre temporelle. Tant que le quatrième maître M4 maintient sa requête, la fréquence des fenêtres temporelles du quatrième maître M4 sur le bus (et donc la bande passante de ce maître M4) est imposée par la logique LRU.

On peut donc conclure que, dans ce premier cas, le temps d'attente maximum entre une nouvelle requête par un maître et l'acquittement de cette requête est égal à la plus longue des fenêtres temporelles.

Dans le second cas illustré sur la figure 6, la périodicité de la requête du quatrième maître M4 est inférieure à la somme des fenêtres temporelles des trois autres maîtres.

Comme précédemment, la priorité de niveau le plus élevé est attribuée au maître M4 introduisant sa requête, du fait qu'il est le maître « le moins récemment utilisé ». La requête du quatrième maître M4, apparaissant par exemple pendant la fenêtre temporelle d'occupation du bus par le troisième maître M3, sera acquittée à la fin de cette fenêtre temporelle. Ensuite, la fréquence des fenêtres temporelles du quatrième maître M4 sur le bus (et donc la largeur de bande de ce maître M4) est imposée par la logique LRU.

Toutefois, dans ce cas, la périodicité de la requête du quatrième maître M4 étant inférieure à la somme des fenêtres temporelles des trois autres maîtres, le quatrième maître M4 retire par exemple sa première requête d'accès au bus dès la fin de la fenêtre temporelle qui lui est associée et réintroduit une seconde requête pendant la fenêtre temporelle d'occupation du bus par le premier maître M1 succédant immédiatement au quatrième maître M4.

La politique LRU qui, depuis l'acquittement de la première requête impose la fréquence des fenêtres temporelles du quatrième maître M4 sur le bus, n'est pas modifiée par la disparition et la réapparition rapide (période inférieure à la somme des fenêtres temporelles des trois autres maîtres) de la requête de ce maître M4. De ce fait, l'acquittement de la nouvelle requête du quatrième maître M4 n'a lieu qu'après l'écoulement des fenêtres temporelles successives des trois autres maîtres.

On peut donc conclure que, dans ce second cas, le temps d'attente maximum entre une nouvelle requête par un maître et l'acquittement de cette requête est égal à la somme des fenêtres temporelles de tous les autres maîtres.

De préférence, on réalisera le module de circuit intégré 10 à partir d'éléments connus en utilisant pour sa conception un langage classique de description de matériel par exemple le langage VHDL.

A titre d'exemple, on proposera ci-dessous un algorithme décrivant le fonctionnement du module de circuit intégré 10 selon l'invention.

Cet algorithme, rédigé de façon synthétique avec des éléments de langage familiers pour l'homme du métier, permettra facilement à ce dernier de décrire complètement le module de circuit intégré 10 dans un langage VHDL et ainsi de fabriquer ce circuit intégré.

### Séquence principale

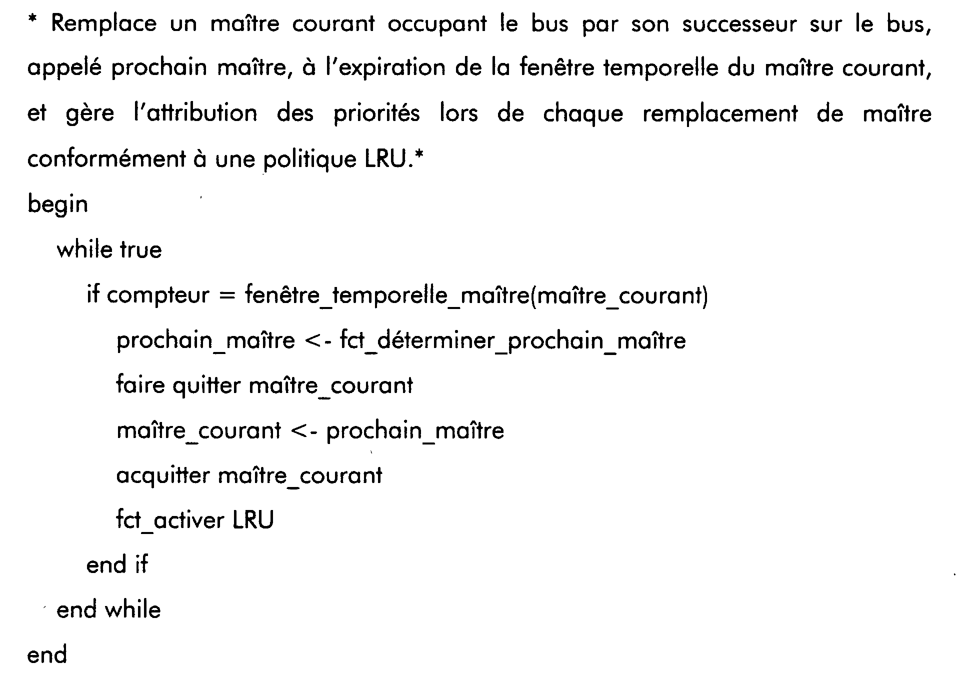

### Gestion du compteur

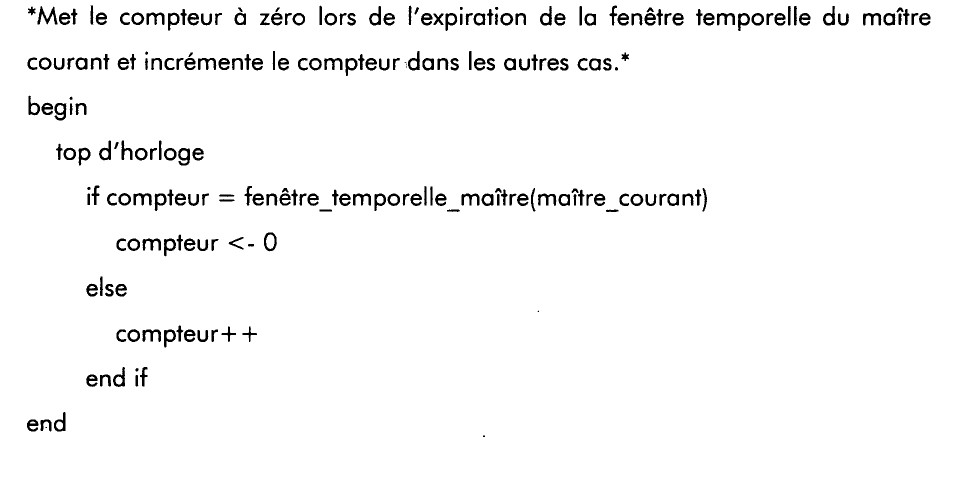

### Fonction : fct déterminer prochain maître

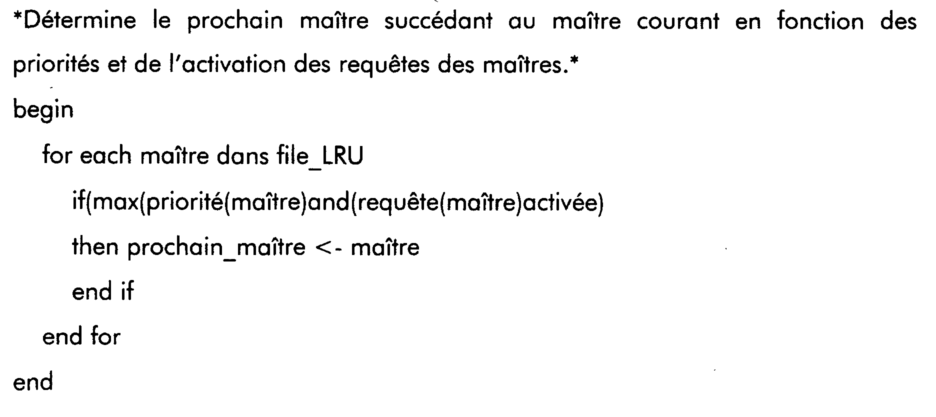

### Fonction : fct_activer LRU

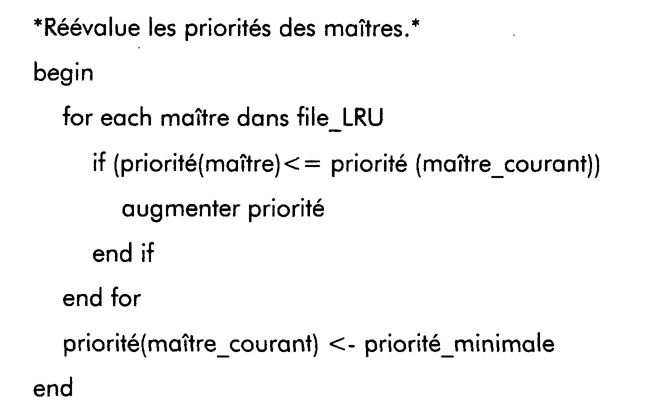

Parmi les avantages de l'invention, on notera en particulier que celle-ci garantit l'accès de chacun des maîtres au bus commun, ceci en limitant le temps d'attente entre la requête d'un maître et son acquittement à une durée qui peut être, dans le cas d'une politique LRU, égale soit à la plus longue des fenêtres temporelles attribuées aux maîtres soit à la somme des fenêtres temporelles des maîtres pour lesquels des requêtes d'accès au bus sont actives.

Par ailleurs, les fenêtres temporelles associées aux différents maîtres constituent des paramètres modifiables dynamiquement par un logiciel.

Bien entendu, l'invention ne se limite pas au mode de réalisation décrit ci-dessus. En particulier, l'homme du métier pourra choisir le cas échéant une politique d'attribution de priorité différente de celle de type LRU.

## Revendications

1. Procédé de gestion de l'accès d'au moins deux maîtres (M1 à M4) à un bus commun, du type dans lequel l'accès au bus est géré par une politique attribuant des priorités graduelles aux différents maîtres (M1 à M4) de façon qu'un nouveau maître prioritaire succède sur le bus à un maître courant dès que ce maître courant quitte le bus, cette politique d'attribution de priorités étant matérialisée par des portes logiques intégrées dans un circuit, **caractérisé en ce qu'**on alloue à chaque maître une fenêtre temporelle (T1 à T4) d'occupation du bus, cette fenêtre constituant un paramètre modifiable propre au maître auquel elle est allouée.

2. Procédé selon la revendication 1, **caractérisé en ce que** la politique d'attribution de priorité est du type LRU -Last Recently Used-, c'est-à-dire attribuant la priorité de niveau le plus élevé au maître le moins récemment utilisé.

3. Procédé selon la revendication 1 ou 2, **caractérisé en ce que** les modifications des différentes fenêtres temporelles (T1 à T4) d'occupation du bus sont réalisées par un logiciel.

4. Circuit intégré de gestion de l'accès d'au moins deux maîtres (M1 à M4) à un bus commun, du type dans lequel l'accès au bus est géré par une politique attribuant des priorités graduelles aux différents maîtres (M1 à M4) de façon qu'un nouveau maître prioritaire succède sur le bus à un maître courant dès que ce maître courant quitte le bus, cette politique d'attribution de priorités étant matérialisée par des portes logiques intégrées dans le circuit, **caractérisé en ce qu**'il comprend des moyens (14) de mémorisation de données contenant des fenêtres temporelles (T1 à T4) d'occupation du bus allouées aux différents maîtres (M1 à M4) respectivement.

5. Circuit selon la revendication 4, **caractérisé en ce que** les moyens de mémorisation (14) sont constitués par une mémoire vive et/ou des registres de façon à permettre la modification des fenêtres temporelles par un logiciel.

6. Circuit selon la revendication 4 ou 5, **caractérisé en ce qu'**il constitue un module de « circuit intégré spécifique à des applications » couramment appelé ASIC (Applications Specific Integrated Circuit).
